# EUROPÄISCHE PATENTSCHRIFT

(11) **EP 4 080 069 B1**
(45) Veröffentlichungstag und Bekanntmachung des Hinweises auf die Patenterteilung: **29.11.2023**
(21) Anmeldenummer: 21185797.4
(22) Anmeldetag: 15.07.2021
(51) Int. Cl.: F16B 5/02

(54) **SYSTEM ZUR BEFESTIGUNG**
SYSTEM FOR FIXING
SYSTÈME DE FIXATION

(30) Priorität: 22.04.2021 DE 202021102165 U
(43) Veröffentlichungstag der Anmeldung: 26.10.2022
(73) Patentinhaber: ULTIMATE Europe Transportation Equipment GmbH, 3304 St. Georgen am Ybbsfelde (AT); Teufl, Manfred, 3332 Rosenau (AT)
(72) Erfinder: Teufl, Manfred, 3332 Rosenau (AT)
(74) Vertreter: KLIMENT & HENHAPEL

(56) Entgegenhaltungen:
- EP-A1- 2 942 535
- WO-A1-2017/178247
- DE-A1- 2 751 233
- DE-A1-102011 050 153
- DE-A1-102011 107 237
- DE-U1-202013 006 149
- GB-A- 2 007 795

## Beschreibung

Die Erfindung betrifft ein System umfassend ein Anbauelement, das
- zumindest einen Befestigungsabschnitt mit zumindest einer Durchgangsöffnung aufweist,
   und ein Befestigungssystem zur Befestigung des Anbauelements an einer zumindest eine Durchgangsöffnung aufweisenden Wagenkastenstruktur, vorzugsweise an einer Wagenkastenstruktur eines Schienenfahrzeuges, wobei das Befestigungssystem
- zumindest ein Fixierelement, welches einen Spreizabschnitt und eine zentrische Bohrung aufweist, und
- zumindest eine Fixierschraube umfasst,
   wobei in einem Vormontagezustand
- das Fixierelement in einer Fixierrichtung gesehen hinter dem Befestigungsabschnitt angeordnet ist und
- die Fixierschraube durch die Durchgangsöffnung des Befestigungsabschnitts in die Bohrung eingeführt ist,
   wobei das System vom Vormontagezustand in einen Montagezustand überführbar ist, in welchem Montagezustand das System in Bezug auf die Wagenkastenstruktur derart angeordnet ist, dass
- ein erster Bereich des Spreizabschnitts innerhalb der Durchgangsöffnung der Wagenkastenstruktur angeordnet ist, und
- ein zweiter Bereich des Spreizabschnitt in Fixierrichtung gesehen hinter der Durchgangsöffnung der Wagenkastenstruktur angeordnet ist und aufgrund einer Verdrehung der zumindest abschnittsweise in der Bohrung angeordneten Fixierschraube gespreizt ist, wodurch das Anbauelement mit der Wagenkastenstruktur verbunden ist, wobei das System zumindest ein Klemmelement mit zumindest einer Durchgangsöffnung umfasst, wobei sowohl im Vormontagezustand als auch im Montagezustand
- der Befestigungsabschnitt zumindest abschnittsweise innerhalb des Klemmelements angeordnet ist,
- das Fixierelement in Fixierrichtung gesehen hinter dem Klemmelement angeordnet ist und
- die Fixierschraube durch die Durchgangsöffnung des Klemmelements geführt ist.

### STAND DER TECHNIK

Aus dem Stand der Technik sind unterschiedliche Ausführungsvarianten von Systemen zur Befestigung von Anbauelementen, wie beispielsweise von Verkleidungselementen, die zur Abdeckung von Innenflächen von Teilen einer Wagenkastenstruktur verwendet werden, bekannt. Insbesondere umfassen solche Systeme Schraubverbindungen in Verbindung mit Fixierelementen.

Beispielsweise ist aus der DE 20 2013 006 149 U1 eine Vorrichtung zur Befestigung eines Anbauelements in Form eines Luftsacks bzw. Airbags an einer Trägerstruktur eines Kraftfahrzeuges bekannt geworden. Im Montagezustand ist der Luftsack mit einem Sicherungskörper, der beispielsweise als Sicherungsschraube ausgeführt sein kann, in einem Trägerabschnitt einer Halteeinrichtung eingeklemmt. Der Trägerabschnitt weist dazu eine Klemme und eine Klemmaufnahme auf, wobei die Klemme mittels Rasthaken in die Klemmaufnahme hineingreift und diese in der Klemmaufnahme verrasten. Trägerabschnitt, Klemme und Klemmaufnahme bilden gemeinsam ein mehrteiliges Klemmelement. Die Befestigungsvorrichtung bietet während der Montage keine Justiermöglichkeit der Positionen des Sicherungskörpers bzw. der Sicherungsschraube sowie eines Rastabschnitts, welcher zu Fixierung der Sicherungsschraube dient.

Die WO 2017/178247 A1 zeigt beispielsweise eine Anordnung einer Befestigungsstruktur an einem Strukturbauteil eines Kraftfahrzeuges mit einem Fasereinlegeelement. Das Fasereinlegeelement dient dazu, eine Übertragung hoher Kräfte zwischen dem Strukturbauteil und einem im Bereich des Fasereinlegeelements mittels Fixierschrauben verbundenen Anbauteil zu ermöglichen, ohne das Strukturbauteil zu beschädigen. Ein Klemmelement fehlt allerdings bei dieser Anordnung. Außerdem ist keine Justiermöglichkeit der miteinander zu befestigenden Bauteile während der Montage möglich.

Um ein Anbauelement mit einer Wagenkastenstruktur zu verbinden, wird solch ein System von einem Vormontagezustand in einen Montagezustand gebracht. Im Vormontagezustand ist das Fixierelement mit dem Anbauelement verbunden. Dieser Zustand wird hergestellt indem das Fixierelement hinter einer Durchgangsöffnung des Anbauelements angeordnet wird und anschließend eine Fixierschraube durch die Durchgangsöffnung in eine Bohrung des Fixierelements eingeführt und verschraubt wird.

Nachdem das System im Vormontagezustand derart an einer Wagenkastenstruktur angeordnet ist, dass das Fixierelement zumindest abschnittsweise durch eine Durchgangsöffnung der Wagenkastenstruktur geführt ist und abschnittsweise hinter die Wagenkastenstruktur bzw. in ein Inneres der Wagenkastenstruktur übersteht, kann das System in den Montagezustand gebracht werden, indem die Fixierschraube verdreht wird. Dadurch spreizt sich der von der Wagenkastenstruktur nach hinten / in das Innere überstehende Bereich des Fixierelements auf und sorgt für eine Verbindung zwischen Anbauteil und Wagenkastenstruktur.

Nachteilig hierbei ist, dass die Durchgangsöffnung der Wagenkastenstruktur und die Durchgangsöffnung des Anbauelements passgenau gefertigt sein müssen, damit das Anbauelement mit der Wagenkastenstruktur verbunden werden kann. Bei Ungenauigkeiten in der Fertigung kann sich die Herstellung der Verbindung sehr schwierig gestalten, da es aufgrund der Abmessungen und dem Gewicht der Elemente, insbesondere des Anbauelements, schwierig ist, diese nachzujustieren. Mitunter ist es in solch einem Fall sogar notwendig, dass die Durchgangsöffnungen nachgebessert oder sogar überhaupt neu angefertigt werden müssen. D.h. ein Toleranzausgleich gestaltet sich sehr schwierig.

Weiters nachteilig ist, dass für eine mechanische, thermische und/oder akustische Entkoppelung zwischen dem Anbauteil und der Wagenkastenstruktur Pufferelemente beigelegt werden müssen. Dies macht den Aufbau der aus dem Stand der Technik bekannten Systeme komplexer und sperriger, wodurch insbesondere die Montage aufwändig ist.

### AUFGABE DER ERFINDUNG

Es ist daher eine Aufgabe der vorliegenden Erfindung, ein System umfassend ein Anbauelement und ein Befestigungssystem zur Verfügung zu stellen, das die Nachteile des Stands der Technik überwindet. Insbesondere soll das System einfach und rasch mit einer Wagenkastenstruktur verbunden werden können, ohne dass eine weitere und/oder zusätzliche Bearbeitung der Wagenkastenstruktur und/oder des Anbauelements vonnöten ist.

### DARSTELLUNG DER ERFINDUNG

Die eingangs gestellte Aufgabe wird bei einem System umfassend ein Anbauelement, das
- zumindest einen Befestigungsabschnitt mit zumindest einer Durchgangsöffnung aufweist,
   und ein Befestigungssystem zur Befestigung des Anbauelements an einer zumindest eine Durchgangsöffnung aufweisenden Wagenkastenstruktur, vorzugsweise an einer Wagenkastenstruktur eines Schienenfahrzeuges, wobei das Befestigungssystem
- zumindest ein Fixierelement, welches einen Spreizabschnitt und eine zentrische Bohrung aufweist, und
- zumindest eine Fixierschraube umfasst,
   wobei in einem Vormontagezustand
- das Fixierelement in einer Fixierrichtung gesehen hinter dem Befestigungsabschnitt angeordnet ist und
- die Fixierschraube durch die Durchgangsöffnung des Befestigungsabschnitts in die Bohrung eingeführt ist,
   wobei das System vom Vormontagezustand in einen Montagezustand überführbar ist, in welchem Montagezustand das System in Bezug auf die Wagenkastenstruktur derart angeordnet ist, dass
- ein erster Bereich des Spreizabschnitts innerhalb der Durchgangsöffnung der Wagenkastenstruktur angeordnet ist, und
- ein zweiter Bereich des Spreizabschnitt in Fixierrichtung gesehen hinter der Durchgangsöffnung der Wagenkastenstruktur angeordnet ist und aufgrund einer Verdrehung der zumindest abschnittsweise in der Bohrung angeordneten Fixierschraube gespreizt ist, wodurch das Anbauelement mit der Wagenkastenstruktur verbunden ist, wobei
   das System ein Klemmelement mit zumindest einer Durchgangsöffnung umfasst,
   wobei sowohl im Vormontagezustand als auch im Montagezustand
- der Befestigungsabschnitt zumindest abschnittsweise innerhalb des Klemmelements angeordnet ist,
- das Fixierelement in Fixierrichtung gesehen hinter dem Klemmelement angeordnet ist und
- die Fixierschraube durch die Durchgangsöffnung des Klemmelements geführt ist,
erfindungsgemäß dadurch gelöst, dass
das Anbauelement ein Verkleidungselement zur Abdeckung von Innenflächen von Teilen einer Wagenkastenstruktur ist, und wobei das zumindest eine Klemmelement sowie das zumindest eine Fixierelement so gestaltet sind, dass diese im Vormontagezustand abhängig von einem Durchmesser der zumindest einen Durchgangsöffnung des Befestigungsabschnitts in Bezug zur zumindest einen Durchgangsöffnung der Wagenkastenstruktur verschiebbar sind.

Zusammenfassend lässt sich also festhalten, dass mittels des zumindest einen Klemmelements Ungenauigkeiten in der Fertigung einerseits des Befestigungsabschnitts sowie des Fixierelements und andererseits der Wagenkastenstruktur, insbesondere Ungenauigkeiten in der Fertigung der Durchgangsöffnungen des Befestigungsabschnitts und der Wagenkastenstruktur, ausgeglichen werden können. Abhängig von einem Durchmesser der Durchgangsöffnung des Befestigungsabschnitts kann das Klemmelement samt Fixierelement nämlich verschoben werden, wodurch die Position des Fixierelements verändert wird.

Dadurch kann das Fixierelement bezüglich der Durchgangsöffnung der Wagenkastenstruktur ausgerichtet und in diese eingeführt werden, selbst wenn sich die Durchgangsöffnung der Wagenkastenstruktur nicht exakt an der vordefinierten / geplanten Stelle befindet.

Der zumindest eine - d.h. einer, zwei oder mehrere - Befestigungsabschnitt des Anbauelements, die Wagenkastenstruktur und das zumindest eine - d.h. eines, zwei oder mehrere - Klemmelement weisen jeweils zumindest eine Durchgangsöffnung auf - d.h. der zumindest eine Befestigungsabschnitt bzw. die Wagenkastenstruktur bzw. das zumindest eine Klemmelement können jeweils eine, zwei oder mehrere Durchgangsöffnungen aufweisen. Des Weiteren umfasst das erfindungsgemäße System zumindest ein - d.h. eines, zwei oder mehrere - Fixierelement sowie zumindest eine - d.h. eine, zwei oder mehrere - Fixierschrauben. Im Folgenden wird, um eine bessere Lesbarkeit zu gewährleisten, immer "nur" von einem dieser Abschnitte, Elemente bzw. Öffnungen gesprochen, wodurch allerdings nicht ausgeschlossen wird, dass zwei oder mehrere dieser Abschnitte, Elemente bzw. Öffnungen vorhanden sind.

Bei der Wagenkastenstruktur kann es sich beispielsweise um einen Verkleidungsträger oder um einen Einschweißteil handeln.

Im Vormontagezustand befindet sich der Befestigungsbereich also derart innerhalb des Klemmelements, dass sich die Durchgangsöffnung des Befestigungsabschnitts und die Durchgangsöffnung des Klemmelements in Fixierrichtung gesehen zumindest abschnittsweise überdecken. Des Weiteren ist das Fixierelement in Fixierrichtung gesehen derart hinter dem Klemmelement angeordnet, dass sich in Fixierrichtung gesehen die Durchgangsöffnung des Klemmelements, die Durchgangsöffnung des Befestigungsabschnitts und die Bohrung des Fixierelements zumindest abschnittsweise überdecken.

Die Fixierschraube ist durch die Durchgangsöffnungen des Klemmelements und des Befestigungsabschnitts in die Bohrung eingeführt und mit dem Fixierelement verschraubt. Ein Kopf der Fixierschraube ist in Fixierrichtung gesehen vor dem Klemmelement angeordnet, wobei ein Durchmesser des Kopfs der Fixierschraube größer ist als ein Durchmesser der Durchgangsöffnung des Klemmelements.

Es ist selbstverständlich nicht ausgeschlossen, dass zwischen dem Kopf der Fixierschraube und dem Klemmelement eine Beilagscheibe und/oder eine Feder und/oder Ähnliches angeordnet ist.

Im Vormontagezustand können das erfindungsgemäße System und die Wagenkastenstruktur derart zueinander angeordnet sein, dass sich der erste Bereich des Spreizabschnitts des Fixierelements innerhalb der Durchgangsöffnung der Wagenkastenstruktur befindet und der zweite Bereich des Spreizabschnitts des Fixierelements in Fixierrichtung gesehen von der Wagenkastenstruktur nach hinten bzw. in ein Inneres hinausragt. D.h. der zweite Bereich des Spreizabschnitts des Fixierelements kann in einem in Fixierrichtung gesehen hinter der Wagenkastenstruktur befindlichen Hohlraum / offenen Raum angeordnet sein. Im Vormontagezustand besteht jedoch noch keine Verbindung zwischen dem erfindungsgemäßen System und der Wagenkastenstruktur, d.h. die genannte relative Anordnung zwischen dem System im Vormontagezustand und der Wagenkastenstruktur kann auch noch geändert werden.

Im Montagezustand sind das erfindungsgemäße System und die Wagenkastenstruktur dann jedenfalls derart zueinander angeordnet, dass sich der erste Bereich des Spreizabschnitts des Fixierelements innerhalb der Durchgangsöffnung der Wagenkastenstruktur befindet und der zweite Bereich des Spreizabschnitts des Fixierelements in Fixierrichtung gesehen von der Wagenkastenstruktur nach hinten bzw. in ein Inneres hinausragt. D.h. der zweite Bereich des Spreizabschnitts des Fixierelements ist in einem in Fixierrichtung gesehen hinter der Wagenkastenstruktur befindlichen Hohlraum / offenen Raum angeordnet.

Es ist vorstellbar, dass das Fixierelement neben dem ersten und dem zweiten Bereich einen Kopfbereich aufweist, der im Montagezustand zwischen dem Klemmelement und der Wagenkastenstruktur angeordnet ist. Der Kopfbereich weist, verglichen mit einem Durchmesser der Durchgangsöffnung der Wagenkastenstruktur, einen größeren Durchmesser auf und besteht üblicherweise aus dem gleichen Material bzw. aus der gleichen Zusammensetzung wie der Spreizabschnitt.

Durch das Verdrehen der Fixierschraube wird der zweite Bereich des Spreizabschnitts im Hohlraum gegen die Wagenkastenstruktur gezogen. Der zweite Bereich des Spreizabschnitts vergrößert dadurch seinen Durchmesser - er spreizt sich auf - und presst sich gegen die Wagenkastenstruktur, wodurch der Montagezustand hergestellt ist, in welchem Montagezustand eine feste und sichere Verbindung von Anbauteil und Wagenkastenstruktur ausgebildet ist. D.h. der zweite Bereich des Spreizabschnitts weist im Montagezustand einen größeren äußeren Durchmesser auf als die Durchgangsöffnung der Wagenkastenstruktur.

Der Spreizabschnitt kann durch eine Hülse im Fixierelement begrenzt werden, wobei die Hülse im Fixierelement eingebettet oder integriert sein kann. Dies stellt sicher, dass der Spreizabschnitt nur bis zu einem gewissen maximalen Grad verformt werden kann, sodass eine entsprechende maximale Vorspannkraft auf die Verbindung wirkt. Eine Beschädigung einzelner Elemente kann auf diese Weise zuverlässig vermieden werden.

Durch die zumindest abschnittsweise Anordnung des Befestigungsabschnitts innerhalb des Klemmelements kann vorzugsweise sichergestellt werden, dass das Klemmelement am Befestigungsabschnitt so festgeklemmt ist, dass das Klemmelement einerseits nicht vom Befestigungsabschnitt unbeabsichtigt herunterfallen kann und andererseits am Befestigungsabschnitt verschoben werden kann. Dies ermöglicht in der Praxis eine besonders bequeme Positionierung bzw. Ausrichtung im Hinblick auf die Durchgangsöffnungen, wie oben geschildert.

Um eine kostengünstige und einfache Fertigung des Klemmelements und gleichzeitig einen großen Verschiebebereich des Klemmelements sicherzustellen, ist in einer Ausführungsvariante der Erfindung vorgesehen, dass das zumindest eine Klemmelement in einem Querschnitt im Wesentlichen U-förmig ausgebildet ist, wobei zwischen einem ersten Schenkel und einem zweiten Schenkel des Klemmelements der zumindest eine Befestigungsabschnitt eingeklemmt ist. Durch diese Konstruktion lässt sich das Klemmelement einfach auf den Befestigungsabschnitt aufschieben und derart justieren, dass sich die Durchgangsöffnung des Klemmelements und die Durchgangsöffnung des Befestigungsabschnitts in Fixierrichtung gesehen zumindest abschnittsweise überdecken. Des Weiteren kann abhängig von der Länge der Schenkel ein großer Verschiebebereich realisiert werden, sodass einfach und schnell eine Position des Fixierelements relativ zu der Durchgangsöffnung der Wagenkastenstruktur geändert werden kann.

In einer weiteren Ausführungsvariante der Erfindung ist vorgesehen, dass ein Durchmesser der zumindest einen Durchgangsöffnung des zumindest einen Befestigungsabschnitts mindestens 1,2 mal, bevorzugt mindestens 1,5 mal, besonders bevorzugt mindestens 2 mal, so groß wie ein Durchmesser der zumindest einen Durchgangsöffnung der Wagenkastenstruktur ist. Durch diese konstruktive Ausgestaltung wird sichergestellt, dass das Klemmelement samt Fixierelement und Fixierschraube entsprechend verschoben werden kann, um eine hohe Toleranzaufnahme des erfindungsgemäßen Systems sicherzustellen - d.h. um Fertigungsungenauigkeiten bei den entsprechenden Durchgangsöffnungen ausgleichen zu können.

Um eine mechanische, thermische und/oder eine akustische Entkoppelung zwischen Anbauteil und Wagenkastenstruktur zu ermöglichen, ohne dass zusätzliche Elemente verbaut werden müssen, ist in einer Ausführungsvariante der Erfindung vorgesehen, dass das zumindest eine Fixierelement ein Elastomer umfasst.

Elastomere zeichnen sich durch ihre Formfestigkeit bei gleichzeitig elastischer Verformbarkeit aus. Aufgrund der guten Dämpfungseigenschaften und der niedrigen Wärmeleitfähigkeit eignen sich Elastomere hervorragend zur Entkoppelung von Bauteilen.

Insbesondere kommen daher als Material bei dem zumindest einen Fixierelement bzw. für das zumindest eine Fixierelement Elastomere mit einer guten thermischen und/oder akustischen und/oder schwingungsdämpfenden Eigenschaft in Frage. Beispielsweise können Ethylen-Propylen-Dien-Kautschuke (EPDM) verwendet werden.

Es ist vorstellbar, dass das Fixierelement abschnittsweise aus einem Elastomer besteht. Ebenso ist es vorstellbar, dass das Fixierelement einen Grundkörper aufweist, welcher Grundkörper mit einem Elastomer beschichtet ist.

Um eine optimale mechanische, thermische und/oder akustische Entkoppelung zu erzielen, ist in einer weiteren Ausführungsvariante der Erfindung vorgesehen, dass das zumindest eine Fixierelement aus einem Elastomer besteht.

Wie weiter oben bereits erwähnt, kann eine Hülse zur Begrenzung des Spreizabschnitts vorgesehen sein. Durch die hiermit einhergehende Begrenzung der Verformbarkeit des Spreizabschnitts bis zu einem gewissen maximalen Grad (bei maximaler Vorspannkraft) kann insbesondere eine Beschädigung des Elastomers zuverlässig vermieden werden - sowohl für den Fall, dass das zumindest eine Fixierelement das Elastomer umfasst, als auch für den Fall, dass das zumindest eine Fixierelement aus dem Elastomer besteht.

In einer weiteren Ausführungsvariante der Erfindung ist vorgesehen, dass die Bohrung zumindest abschnittsweise ein Innengewinde aufweist. Mittels des Innengewindes kann die Fixierschraube besonders einfach und leicht in das Fixierelement eingeschraubt werden ohne, dass es zu einer allfälligen Beschädigung des Fixierelements kommt. Des Weiteren lässt sich durch das leichte Einschrauben der Montagezustand des erfindungsgemäßen Systems besonders gut herstellen.

Bei einer bevorzugten Ausführungsform des erfindungsgemäßen Systems ist vorgesehen, dass ein Durchmesser der zumindest einen Durchgangsöffnung des zumindest einen Klemmelements kleiner als ein Durchmesser der zumindest einen Durchgangsöffnung des zumindest einen Befestigungsabschnitts ist, wobei vorzugsweise der Durchmesser der zumindest einen Durchgangsöffnung des zumindest einen Klemmelements höchstens so groß wie ein Durchmesser der zumindest einen Durchgangsöffnung der Wagenkastenstruktur ist. Dies erlaubt eine besonders genaue Ausrichtung der jeweiligen Fixierschraube bzw. des jeweiligen Fixierelements zur jeweiligen Durchgangsöffnung der Wagenkastenstruktur, wobei gleichzeitig eine hohe mechanische Stabilität im Montagezustand gewährleistet ist.

Bei einer bevorzugten Ausführungsform des erfindungsgemäßen Systems ist es, insbesondere zur Förderung der mechanischen Stabilität im Montagezustand, vorgesehen, dass das zumindest eine Klemmelement zumindest zwei Durchgangsöffnungen aufweist, die in Fixierrichtung gesehen hintereinander angeordnet sind. Entsprechend kann die jeweilige Fixierschraube durch die jeweils in Fixierrichtung hintereinander angeordneten Durchgangsöffnungen des zumindest einen Klemmelements geführt werden.

Insbesondere kann eine derartige Anordnung von Durchgangsöffnungen vorgehsehen sein, wenn das zumindest eine Klemmelement in einem Querschnitt im Wesentlichen U-förmig ausgebildet ist, wie oben geschildert, um auf eine einfache Art und Weise eine besonders hohe mechanische Stabilität im Montagezustand zu gewährleisten.

Bei einer besonders bevorzugten Ausführungsform des erfindungsgemäßen Systems ist vorgesehen, dass die in Fixierrichtung gesehen hintereinander angeordneten Durchgangsöffnungen des zumindest einen Klemmelements eine erste Durchgangsöffnung und eine zweite Durchgangsöffnung umfassen, wobei die erste Durchgangsöffnung in Fixierrichtung gesehen vor der zweiten Durchgangsöffnung angeordnet ist und wobei die erste Durchgangsöffnung einen Durchmesser aufweist der größer ist als ein Durchmesser der zweiten Durchgangsöffnung. Diese Verkleinerung der Durchmesser der Durchgangsöffnungen in Fixierrichtung bzw. Vergrößerung der Durchmesser gegen die Fixierrichtung erleichtert insbesondere das Zentrieren und Einführen der jeweiligen Fixierschraube bezogen auf das jeweilige Fixierelement.

Bei einer bevorzugten Ausführungsform des erfindungsgemäßen Systems ist vorgesehen, dass das zumindest eine Klemmelement in einer quer, vorzugsweise normal, zur Fixierrichtung verlaufenden Ebene zumindest zwei Durchgangsöffnungen aufweist, die in der Ebene eine fixe Anordnung zueinander aufweisen. Entsprechend kann auch bei grundsätzlich hohen Fertigungs- bzw. Passgenauigkeitstoleranzen eine präzise Anordnung von Fixierelementen bzw. Fixierschrauben in der Ebene erreicht werden.

Besonders einfach lässt sich die genannte fixe Anordnung der Durchgangsöffnungen des zumindest einen Klemmelements zueinander realisieren, indem diese in einem einstückig hergestellten Abschnitt des jeweiligen Klemmelements ausgebildet sind.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine axonometrische Ansicht des erfindungsgemäßen Systems in einem Montagezustand;
- Fig. 2: eine detaillierte axonometrische Schnittansicht des erfindungsgemäßen Systems im Montagezustand;
- Fig. 3: eine detaillierte seitliche Schnittansicht des erfindungsgemäßen Systems in einem Vormontagezustand;
- Fig. 4: eine detaillierte seitliche Schnittansicht des erfindungsgemäßen Systems im Montagezustand.

### WEGE ZUR AUSFÜHRUNG DER ERFINDUNG

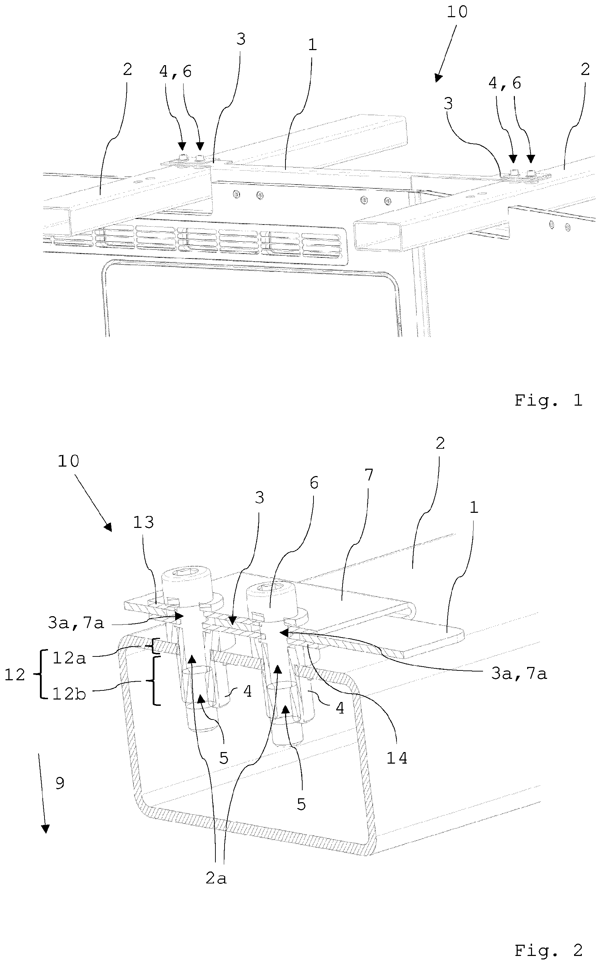

Fig. 1 zeigt eine axonometrische Ansicht des erfindungsgemäßen Systems in einem Montagezustand 10, wobei die Verbindung zwischen einem Anbauelement 1 und einer Wagenkastenstruktur 2, bei welcher Wagenkastenstruktur 2 es sich in diesem Ausführungsbeispiel um zwei Verkleidungsträger handelt, überblicksmäßig zu sehen ist. Das erfindungsgemäße System umfasst in diesem Ausführungsbeispiel das Anbauelement 1 mit zwei Befestigungsabschnitten 3 sowie ein Befestigungssystem umfassend vier Fixierelemente 4 und vier Fixierschrauben 6.

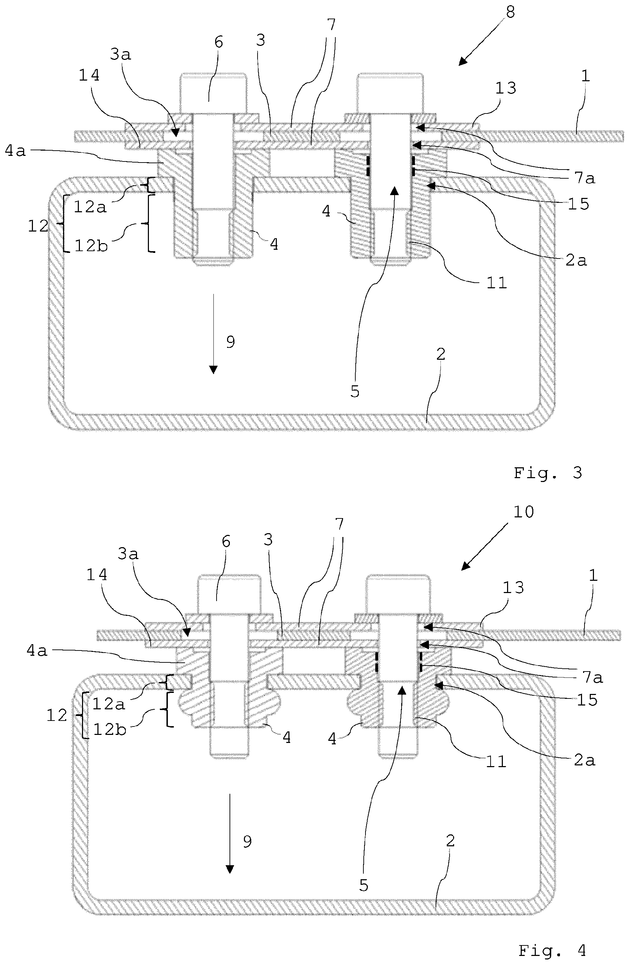

Fig. 2 stellt eine detaillierte axonometrische Schnittansicht des in Fig. 1 gezeigten erfindungsgemäßen Systems im Montagezustand 10 dar, wobei in Fig. 2 lediglich der linke Teil der Wagenkastenstruktur 2, nämlich der linke Verkleidungsträger, samt dem erfindungsgemäßen System zu sehen ist. Zusätzlich zeigt Fig. 4 eine detaillierte seitliche Schnittansicht des in Fig. 2 dargestellten Teils des erfindungsgemäßen Systems im Montagezustand 10, wohingegen Fig. 3 einen Vormontagezustand 8 zeigt.

In Fig. 2 und in Fig. 4 ist einer der beiden Befestigungsabschnitte 3 des Anbauelements 1 sichtbar, welcher Befestigungsabschnitt 3 zwei Durchgangsöffnungen 3a aufweist. Des Weiteren sind zwei Fixierelemente 4, zwei Fixierschrauben 6 und ein Klemmelement 7 mit mehreren, zu den Durchgangsöffnungen 3a korrespondierenden Durchgangsöffnungen 7a sichtbar, wobei die Fixierelemente 4 jeweils einen Spreizabschnitt 12 mit einem ersten Bereich 12a und einem zweiten Bereich 12b aufweisen, wobei die Fixierelemente 4 jeweils mit einer zentrischen Bohrung 5 samt Innengewinde 11 versehen sind.

Das Klemmelement 7 ist in diesem Ausführungsbeispiel in einem Querschnitt U-förmig ausgebildet, wobei zwischen einem ersten Schenkel 13 und einem zweiten Schenkel 14 des Klemmelements 7 der Befestigungsabschnitt 3 eingeklemmt ist. Durch diese Konstruktion lässt sich das Klemmelement 7 einfach auf den Befestigungsabschnitt 3 aufschieben und derart justieren, dass sich die Durchgangsöffnungen 7a des Klemmelements 7 und die Durchgangsöffnungen 3a des Befestigungsabschnitts 3 in einer Fixierrichtung 9 gesehen zumindest abschnittsweise überdecken. Des Weiteren kann abhängig von der Länge der Schenkel 13,14 ein großer Verschiebebereich realisiert werden, wodurch ggf. Ungenauigkeiten in der Fertigung der Durchgangsöffnungen 2a, 3a der Wagenkastenstruktur 2 und des Befestigungsabschnitts 3 sowie der Bohrung 5 des Fixierelements 4 ausgeglichen werden können.

Im dargestellten Ausführungsbeispiel sind Durchmesser der Durchgangsöffnungen 7a des Klemmelements 7 nicht nur kleiner als Durchmesser der Durchgangsöffnungen 3a des Befestigungsabschnitts 3 und gleichzeitig größer als Durchmesser der Durchgangsöffnungen 2a der Wagenkastenstruktur 2. Darüberhinaus bilden die in Fixierrichtung 9 gesehen hintereinander angeordneten Durchgangsöffnungen 7a erste Durchgangsöffnungen (im Schenkel 13) und zweite Durchgangsöffnungen (im Schenkel 14) mit unterschiedlich großen Durchmessern aus, wobei die ersten Durchgangsöffnungen in Fixierrichtung 9 gesehen vor den zweiten Durchgangsöffnungen angeordnet sind und einen größeren Durchmesser als die zweiten Durchgangsöffnungen aufweisen, vgl. Fig. 3 und Fig. 4.

Die Schenkel 13, 14 definieren Ebenen, die normal auf die Fixierrichtung 9 stehen, wobei jeder Schenkel 13, 14 zwei Durchgangsöffnungen 7a aufweist, die in der jeweiligen Ebene eine fixe Anordnung zueinander aufweisen.

Im Montagezustand 10 (vgl. Fig. 4) - und im dargestellten Ausführungsbeispiel auch im Vormontagezustand 8 (vgl. Fig. 3) - ist der Befestigungsabschnitt 3 also abschnittsweise innerhalb des Klemmelements 7 angeordnet, wobei in Fixierrichtung 9 die Anordnung folgendermaßen aussieht: erster Schenkel 13, Befestigungsabschnitt 3, zweiter Schenkel 14. Die Fixierelemente 4 sind in der Fixierrichtung 9 gesehen hinter dem Klemmelement 7 angeordnet, wobei sich ein Kopfbereich 4a der Fixierelemente 4 in Fixierrichtung 9 gesehen zwischen dem zweiten Schenkel 14 und der Wagenkastenstruktur 2 befindet. Der erste Bereich 12a des Spreizabschnitts 12 ist innerhalb der Durchgangsöffnung 2a der Wagenkastenstruktur 2 angeordnet und der zweite Bereich 12b des Spreizabschnitts 12 befindet sich in Fixierrichtung 9 gesehen hinter der Durchgangsöffnung 2a der Wagenkastenstruktur 2 - d.h. der zweite Bereich 12b steht in Fixierrichtung 9 gesehen von der Wagenkastenstruktur 2 in ein Inneres über. Des Weiteren sind im Montagezustand 10 die Fixierschrauben 6 durch die Durchgangsöffnungen 3a,7a des Befestigungsabschnitts 3 und des Klemmelements 7 in die Bohrung 5 eingeführt und stehen mit dem Innengewinde 11 zumindest bis zu einem gewissen Grad in Eingriff.

Im Gegensatz zum Vormontagezustand 8, in dem ein Abheben bzw. Lösen des Systems von der Wagenkastenstruktur problemlos möglich ist, sind im Montagezustand 10 die Fixierschrauben 6 mittels des Innengewindes 11 mit dem entsprechenden Fixierelement 4 derart verschraubt, dass der zweite Bereich 12b des Spreizabschnitts 12 gespreizt ist - d.h. dass der zweite Bereich 12b des Spreizabschnitts 12 im Montagezustand 10 einen größeren äußeren Durchmesser aufweist als die entsprechende Durchgangsöffnung 2a der Wagenkastenstruktur 2. Aufgrund des Verspreizens des zweiten Bereichs 12b gegen die Wagenkastenstruktur 2 ist im Montagezustand 10 eine sichere und feste Verbindung gewährleistet.

Um eine mechanische, thermische und/oder akustische Entkoppelung zu erreichen, bestehen die Fixierelemente 4 in diesem Ausführungsbeispiel aus einem Elastomer, beispielsweise aus EPDM.

Schließlich ist in Fig. 3 und Fig. 4 bei einem der Fixierelemente 4 eine optional eingebettete Hülse 15 schematisch strichliert angedeutet, die den Spreizabschnitt 12 begrenzt. Dies stellt sicher, dass der Spreizabschnitt 12 nur bis zu einem gewissen maximalen Grad verformt werden kann, sodass eine entsprechende maximale Vorspannkraft auf die Verbindung wirkt. Eine Beschädigung des Elastomers wird hierdurch zuverlässig vermieden.

### BEZUGSZEICHENLISTE

- 1: Anbauelement
- 2: Wagenkastenstruktur
2a Durchgangsöffnung
- 3: Befestigungsabschnitt
3a Durchgangsöffnung
- 4: Fixierelement
4a Kopfbereich
- 5: Bohrung
- 6: Fixierschraube
- 7: Klemmelement
7a Durchgangsöffnung
- 8: Vormontagezustand
- 9: Fixierrichtung
- 10: Montagezustand
- 11: Innengewinde
- 12: Spreizabschnitt des Fixierelements 4
12a erster Bereich
12b zweiter Bereich
- 13: erster Schenkel
- 14: zweiter Schenkel
- 15: Hülse

## Patentansprüche

1. System umfassend ein Anbauelement (1), das
- zumindest einen Befestigungsabschnitt (3) mit zumindest einer Durchgangsöffnung (3a) aufweist,
und ein Befestigungssystem zur Befestigung des Anbauelements (1) an einer zumindest eine Durchgangsöffnung (2a) aufweisenden Wagenkastenstruktur (2), vorzugsweise an einer Wagenkastenstruktur (2) eines Schienenfahrzeuges, wobei das Befestigungssystem
- zumindest ein Fixierelement (4), welches einen Spreizabschnitt (12) und eine zentrische Bohrung (5) aufweist, und
- zumindest eine Fixierschraube (6) umfasst,
wobei in einem Vormontagezustand (8)
- das Fixierelement (4) in einer Fixierrichtung (9) gesehen hinter dem Befestigungsabschnitt (3) angeordnet ist und
- die Fixierschraube (6) durch die Durchgangsöffnung (3a) des Befestigungsabschnitts (3) in die Bohrung (5) eingeführt ist,
wobei das System vom Vormontagezustand (8) in einen Montagezustand (10) überführbar ist, in welchem Montagezustand (10) das System in Bezug auf die Wagenkastenstruktur (2) derart angeordnet ist, dass
- ein erster Bereich (12a) des Spreizabschnitts (12) innerhalb der Durchgangsöffnung (2a) der Wagenkastenstruktur (2) angeordnet ist, und
- ein zweiter Bereich (12b) des Spreizabschnitts (12) in Fixierrichtung (9) gesehen hinter der Durchgangsöffnung (2a) der Wagenkastenstruktur (2) angeordnet ist und aufgrund einer Verdrehung der zumindest abschnittsweise in der Bohrung (5) angeordneten Fixierschraube (6) gespreizt ist, wodurch das Anbauelement (1) mit der Wagenkastenstruktur (2) verbunden ist, wobei
das System zumindest ein Klemmelement (7) mit zumindest einer Durchgangsöffnung (7a) umfasst,
wobei sowohl im Vormontagezustand (8) als auch im Montagezustand (10)
- der Befestigungsabschnitt (3) zumindest abschnittsweise innerhalb des Klemmelements (7) angeordnet ist,
- das Fixierelement (4) in Fixierrichtung (9) gesehen hinter dem Klemmelement (7) angeordnet ist und
- die Fixierschraube (6a) durch die Durchgangsöffnung (7a) des Klemmelements (7) geführt ist,
**dadurch gekennzeichnet, dass**
das Anbauelement (1) ein Verkleidungselement zur Abdeckung von Innenflächen von Teilen einer Wagenkastenstruktur (2) ist, und wobei das zumindest eine Klemmelement (7) sowie das zumindest eine Fixierelement (4) so gestaltet sind, dass diese im Vormontagezustand (8) abhängig von einem Durchmesser der zumindest einen Durchgangsöffnung (3a) des Befestigungsabschnitts (3) in Bezug zur zumindest einen Durchgangsöffnung (2a) der Wagenkastenstruktur (2) verschiebbar sind.

2. System nach Anspruch 1, **dadurch gekennzeichnet, dass** das zumindest eine Klemmelement (7) in einem Querschnitt im Wesentlichen U-förmig ausgebildet ist, wobei zwischen einem ersten Schenkel (13) und einem zweiten Schenkel (14) des Klemmelements (7) der zumindest eine Befestigungsabschnitt (3) eingeklemmt ist.

3. System nach einem der Ansprüche 1 bis 2, **dadurch gekennzeichnet, dass** ein Durchmesser der zumindest einen Durchgangsöffnung (3a) des zumindest einen Befestigungsabschnitts (3) mindestens 1,2 mal, bevorzugt mindestens 1,5 mal, besonders bevorzugt mindestens 2 mal, so groß wie ein Durchmesser der zumindest einen Durchgangsöffnung (2a) der Wagenkastenstruktur (2) ist.

4. System nach einem der Ansprüche 1 bis 3, **dadurch gekennzeichnet, dass** das zumindest eine Fixierelement (4) ein Elastomer umfasst.

5. System nach Anspruch 4, **dadurch gekennzeichnet, dass** das zumindest eine Fixierelement (4) aus einem Elastomer besteht.

6. System nach einem der Ansprüche 1 bis 5, **dadurch gekennzeichnet, dass** die Bohrung (5) zumindest abschnittsweise ein Innengewinde (11) aufweist.

7. System nach einem der Ansprüche 1 bis 6, **dadurch gekennzeichnet, dass** ein Durchmesser der zumindest einen Durchgangsöffnung (7a) des zumindest einen Klemmelements (7) kleiner als ein Durchmesser der zumindest einen Durchgangsöffnung (3a) des zumindest einen Befestigungsabschnitts (3) ist, wobei vorzugsweise der Durchmesser der zumindest einen Durchgangsöffnung (7a) des zumindest einen Klemmelements (7) höchstens so groß wie ein Durchmesser der zumindest einen Durchgangsöffnung (2a) der Wagenkastenstruktur (2) ist.

8. System nach einem der Ansprüche 1 bis 7, **dadurch gekennzeichnet, dass** das zumindest eine Klemmelement (7) zumindest zwei Durchgangsöffnungen (7a) aufweist, die in Fixierrichtung (9) gesehen hintereinander angeordnet sind.

9. System nach Anspruch 8, **dadurch gekennzeichnet, dass** die in Fixierrichtung (9) gesehen hintereinander angeordneten Durchgangsöffnungen (7a) des zumindest einen Klemmelements (7) eine erste Durchgangsöffnung und eine zweite Durchgangsöffnung umfassen, wobei die erste Durchgangsöffnung in Fixierrichtung (9) gesehen vor der zweiten Durchgangsöffnung angeordnet ist und wobei die erste Durchgangsöffnung einen Durchmesser aufweist der größer ist als ein Durchmesser der zweiten Durchgangsöffnung.

10. System nach einem der Ansprüche 1 bis 9, **dadurch gekennzeichnet, dass** das zumindest eine Klemmelement (7) in einer quer, vorzugsweise normal, zur Fixierrichtung (9) verlaufenden Ebene zumindest zwei Durchgangsöffnungen (7a) aufweist, die in der Ebene eine fixe Anordnung zueinander aufweisen.

## Claims

1. System comprising an attachment element (1), which
- has at least one fastening section (3) with at least one through-opening (3a),
and a fastening system for fastening the attachment element (1) to a carriage body structure (2) having at least one through-opening (2a),
preferably to a carriage body structure (2) of a rail vehicle, wherein the fastening system
- comprises at least one fixing element (4) which has a spreading section (12) and a centric bore (5), and
- at least one fixing screw (6),
wherein in a pre-assembly state (8)
- the fixing element (4) is arranged behind the fastening section (3) as seen in a fixing direction (9) and
- the fixing screw (6) is inserted into the bore (5) through the through-opening (3a) of the fastening section (3),
wherein the system is transferable from the pre-assembly state (8) to an assembly state (10), in which assembly state (10) the system is arranged in such a way with respect to the carriage body structure (2) that
- a first region (12a) of the spreading section (12) is arranged inside the through-opening (2a) of the carriage body structure (2), and
- a second region (12b) of the spreading section (12) is arranged behind the through-opening (2a) of the carriage body structure (2), as seen in the fixing direction (9), and is spread due to a rotation of the fixing screw (6) arranged at least in sections in the bore (5), whereby the attachment element (1) is connected to the carriage body structure (2), wherein
the system comprises at least one clamping element (7) having at least one through-opening (7a),
wherein both in the pre-assembly state (8) and in the assembly state (10)
- the fastening section (3) is arranged at least in sections inside the clamping element (7),
- the fixing element (4) is arranged behind the clamping element (7) as seen in the fixing direction (9), and
- the fixing screw (6a) is guided through the through-opening (7a) of the clamping element (7),
**characterized in that**
the attachment element (1) is a cladding element for covering inner surfaces of parts of a carriage body structure (2), and wherein the at least one clamping element (7) and the at least one fixing element (4) are designed in such a way that, in the pre-assembly state (8), they can be displaced in relation to the at least one through-opening (2a) of the carriage body structure (2) as a function of a diameter of the at least one through-opening (3a) of the fastening section (3).

2. System according to claim 1, **characterized in that** the at least one clamping element (7) is designed to be substantially U-shaped in a cross-section, wherein the at least one fastening section (3) is clamped between a first leg (13) and a second leg (14) of the clamping element (7).

3. System according to one of claims 1 to 2, **characterized in that** a diameter of the at least one through-opening (3a) of the at least one fastening section (3) is at least 1.2 times, preferably at least 1.5 times, particularly preferably at least 2 times, as large as a diameter of the at least one through-opening (2a) of the carriage body structure (2).

4. System according to one of claims 1 to 3, **characterized in that** the at least one fixing element (4) comprises an elastomer.

5. System according to claim 4, **characterized in that** the at least one fixing element (4) consists of an elastomer.

6. System according to one of claims 1 to 5, **characterized in that** the bore (5) has an internal thread (11) at least in sections.

7. System according to one of claims 1 to 6, **characterized in that** a diameter of the at least one through-opening (7a) of the at least one clamping element (7) is smaller than a diameter of the at least one through-opening (3a) of the at least one fastening section (3), wherein preferably the diameter of the at least one through-opening (7a) of the at least one clamping element (7) is at most as large as a diameter of the at least one through-opening (2a) of the carriage body structure (2).

8. System according to one of claims 1 to 7, **characterized in that** the at least one clamping element (7) has at least two through-openings (7a) which, as viewed in the fixing direction (9), are arranged one behind the other.

9. System according to claim 8, **characterized in that** the through-openings (7a) of the at least one clamping element (7), which are arranged one behind the other as viewed in the fixing direction (9), comprise a first through-opening and a second through-opening, wherein the first through-opening is arranged upstream of the second through-opening as viewed in the fixing direction (9), and wherein the first through-opening has a diameter which is larger than a diameter of the second through-opening.

10. System according to one of claims 1 to 9, **characterized in that** the at least one clamping element (7) has at least two through-openings (7a) in a plane extending transversely, preferably normally, to the fixing direction (9), which have a fixed arrangement relative to one another in the plane.

## Revendications

1. Système comprenant un élément rapporté (1) qui
- comporte au moins une section de fixation (3) avec au moins une ouverture de passage (3a)
et un système de fixation pour la fixation de l'élément rapporté (1) sur une structure de caisse de véhicule (2) comportant au moins une ouverture de passage (2a), de préférence sur une structure de caisse de véhicule (2) d'un véhicule ferroviaire, dans lequel le système de fixation
- comprend au moins un élément de fixation (4) comportant une section d'expansion (12) et un perçage central (5) et
- comprend au moins une vis de fixation (6),
- l'élément de fixation (4) étant disposé, dans un état avant montage (8), en arrière de la section de fixation (3) dans le sens de fixation (9) et
- la vis de fixation (6) est insérée à travers l'ouverture de passage (3a) de la section de fixation (3),
lequel système peut être passé de l'état avant montage (8) à un état de montage (10), état de montage (10) dans lequel le système est disposé par rapport à la structure de caisse de véhicule (2) de telle manière que
- une première région (12a) de la section d'expansion (12) soit disposée à l'intérieur de l'ouverture de passage (2a) de la structure de caisse de véhicule (2) et
- une deuxième région (12b) de la section d'expansion (12) soit disposée en arrière de l'ouverture de passage (2a) de la structure de caisse de véhicule (2) dans le sens de fixation (9) et soit déployée sous l'effet d'une rotation de la vis de fixation (6) disposée au moins en partie dans le perçage (5), de sorte que l'élément rapporté (1) est assemblé avec la structure de caisse de véhicule (2),
le système comprenant au moins un élément de serrage (7) avec au moins une ouverture de passage (7a),
- la section de fixation (3) étant disposée au moins en partie à l'intérieur de l'élément de serrage (7) aussi bien dans l'état avant montage (8) que dans l'état de montage (10),
- l'élément de fixation (4) étant disposé en arrière de l'élément de serrage (7) dans le sens de fixation (9) et
- la vis de fixation (6a) étant passée à travers l'ouverture de passage (7a) de l'élément de serrage (7),
**caractérisé en ce que** l'élément rapporté (1) est un élément d'habillage destiné à couvrir des surfaces intérieures de parties d'une structure de caisse de véhicule (2), l'au moins un élément de serrage (7) et l'au moins un élément de fixation (4) étant conformés de façon à pouvoir être déplacés dans l'état avant montage (8), en fonction d'un diamètre de l'au moins une ouverture de passage (3a) de la section de fixation (3), par rapport à l'au moins une ouverture de passage (2a) de la structure de caisse de véhicule (2).

2. Système selon la revendication 1, **caractérisé en ce que** l'au moins un élément de serrage (7) a une section sensiblement en forme de U, l'au moins une section de fixation (3) étant serrée entre un premier bras (13) et un deuxième bras (14) de l'élément de serrage (7).

3. Système selon l'une des revendications 1 à 2, **caractérisé en ce que** le diamètre de l'au moins une ouverture de passage (3a) de l'au moins une section de fixation (3) est au moins 1,2 fois, de préférence au moins 1,5 fois, en particulier au moins 2 fois plus grand que celui de l'au moins une ouverture de passage (2a) de la structure de caisse de véhicule (2).

4. Système selon l'une des revendications 1 à 3, **caractérisé en ce que** l'au moins un élément de fixation (4) comprend un élastomère.

5. Système selon la revendication 4, **caractérisé en ce que** l'au moins un élément de fixation (4) se compose d'un élastomère.

6. Système selon l'une des revendications 1 à 5, **caractérisé en ce que** le perçage (5) possède au moins en partie un filetage intérieur (11).

7. Système selon l'une des revendications 1 à 6, **caractérisé en ce que** le diamètre de l'au moins une ouverture de passage (7a) de l'au moins un l'élément de serrage (7) est plus petit que celui de l'au moins une ouverture de passage (3a) de l'au moins une section de fixation (3), de préférence le diamètre de l'au moins une ouverture de passage (7a) de l'au moins un élément de serrage (7) étant au maximum aussi grand que celui de l'au moins une ouverture de passage (2a) de la structure de caisse de véhicule (2).

8. Système selon l'une des revendications 1 à 7, **caractérisé en ce que** l'au moins un élément de serrage (7) comporte au moins deux ouvertures de passage (7a) qui sont disposées l'une derrière l'autre dans le sens de fixation (9).

9. Système selon la revendication 8, **caractérisé en ce que** les ouvertures de passage (7a) de l'au moins un l'élément de serrage (7) disposées l'une derrière l'autre dans le sens de fixation (9) comprennent une première ouverture de passage et une deuxième ouverture de passage, la première ouverture de passage étant disposée en avant de la deuxième ouverture de passage dans le sens de fixation (9) et la première ouverture de passage ayant un plus grand diamètre que la deuxième ouverture de passage.

10. Système selon l'une des revendications 1 à 9, **caractérisé en ce que** l'au moins un élément de serrage (7) présente dans un plan transversal, de préférence perpendiculaire, par rapport au sens de fixation (9) deux ouvertures de passage (7a) qui sont disposées de façon fixe l'une par rapport à l'autre dans le plan.
